# EUROPÄISCHE PATENTSCHRIFT

(11) **EP 0 860 688 B1**
(45) Veröffentlichungstag und Bekanntmachung des Hinweises auf die Patenterteilung: **07.12.2005**
(21) Anmeldenummer: 98100654.7
(22) Anmeldetag: 16.01.1998
(51) Int. Cl.: G01C 21/20, G08G 1/0969, A01B 79/00, G09B 29/10

(54) **Elektronische Kartenbilddarstellung in einem Kraftfahrzeug**
Electronic map image display in a motor vehicle
Affichage électronique d'une image d'une carte dans un véhicule à moteur

(30) Priorität: 20.02.1997 DE 19706614
(43) Veröffentlichungstag der Anmeldung: 26.08.1998
(73) Patentinhaber: CLAAS KGaA, 33428 Harsewinkel (DE)
(72) Erfinder: Steckel, Thilo, 33428 Harsewinkel (DE)

(56) Entgegenhaltungen:
- EP-A- 0 635 960
- DE-A- 4 322 293
- DE-A- 4 342 171
- DE-A- 4 423 083

## Beschreibung

Die Erfindung betrifft ein Verfahren für eine programmgesteuerte Darstellung eines elektronischen Kartenbildes auf einem Bildschirm eines Kraftfahrzeuges, das ein Ortungssystem zu einer jeweiligen Fahrzeugortsbestimmung und ein Orientierungssystem zu dessen jeweilige Fahrtrichtungsbestimmung und einen Bildschirm-Betriebsrechner umfaßt, der unmittelbar und/oder über einen Funkdatenübertragungskanal Zugriff auf Karteninformationen hat und auf diese abhängig vom jeweils bestimmten Fahrzeugort zugreift und zur Kartenbilddarstellung aufbereitet, in die jeweils ein Ortsanzeiger und ggf. eine Navigationsinformation eingebracht werden.

Es ist bekannt, in Kraftfahrzeugen einen elektronischen Bildschirm anzuordnen, auf dem programmgesteuert ein Ausschnitt einer Straßenkarte, ggf. mit einem Ortsanzeiger und einem Navigationshilfezeiger dargestellt wird. Die Straßenkarteninformation ist jeweils von einem elektronischen Kartenspeicher, der im Fahrzeug zugreifbar angeordnet ist, oder extern über Funk bereitsgestellt. Der Ortungszeiger wird gemäß den Ortungsdaten, die von einem im Fahrzeug angeordneten Ortungssystemempfänger, z.B. einem DGPS, laufend ermittelt wurde, in das Straßenkartenbild eingetragen, wobei der Straßenkartenausschnitt jeweils passend zu den Ortungsdaten ausgewählt ist. Der Navigationshilfezeiger weist jeweils in die einzuschlagende Straßenfahrtrichtung, die entsprechend einer vorgewählten Fahrtroute empfohlen wird.

Für landwirtschaftlich genutzte Fahrzeuge, insbes. Landmaschinen, ist das bekannte Betriebsverfahren einer kartografischen Bildschirmanzeige allenfalls zur Straßenfahrt nutzbar, im freien Gelände und auf dem Acker versagt es jedoch.

Aus der EP 0635960 A1 ist es bekannt, mehrere Rechner durch ein Datenübertragungsnetz mit einem Zentralrechner zu verbinden, wobei die einzelnen Rechner landwirtschaftliche kartografische Datenbanken enthalten und der Zentralrechner gesamtkartografische Datenbankinformationen sammelt und zur Abfrage bereit hält.

Weiter ist es aus der DE 43 42 171 A1 bekannt, die momentane Arbeitsposition von landwirtschaftlichen Arbeitsmaschinen mittels externer Ortungssysteme zu ermitteln und in einem Computersystem abzuspeichem und gegebenenfalls über geeignete Anzeigeeinheiten dem Betreiber der landwirtschaftlichen Arbeitsmaschine anzuzeigen. Derartige Systeme sind gut zur Darstellung der momentanen Position einer landwirtschaftlichen Arbeitsmaschine in einem zu bearbeitenden Territorium und zur Darstellung von sogenannten Flächenbilanzen wie etwa dem Verhältnis von bearbeitetem zu dem noch zu bearbeitenden Territorium geeignet. Hingegen fehlt es derartigen Systemen an geeigneten Mitteln, in Abhängigkeit von den generierten geographischen Daten einen den Betreiber von Überwachungsvorgängen entlastenden optimierten Betrieb der landwirtschaftlichen Arbeitsmaschine zu ermöglichen.

Es ist Aufgabe der Erfindung, eine kartografische Bildschirmanzeige als Navigationshilfe, insbes. für landwirtschaftlich genutzte Fahrzeuge und Landmaschinen, zu schaffen, die ein möglichst optimales Navigieren und einen möglichst optimalen Betrieb auch im freien Gelände unterstützen.

Die Lösung besteht darin, daß die Karteninformation fahrtechnische und/oder bearbeitungstechnische Daten des zu befahrenden oder zu bearbeitenden Geländes beinhaltet und diese Daten jeweils abhängig von jeweiligen Betriebsparametern des Fahrzeuges automatisch selektiv zu der jeweiligen ortsbezogenen Kartenbilddarstellung aufbereitet werden.

Die in Dateien erfaßten Kartendaten des freien Geländes umfassen neben den Straßen, Schlag- und Ackergrenzen Höhenlinien, jeweils fahrtechnisch zu beachtende Hindernisse, wie unbefahrbare Sumpf- und Wasserflächen sowie Gräben und emporragende Objekte, wie Mauern, Hecken, Scheunen, Höhen- oder Steigungsdaten sowie Agrardaten, wie Fruchtart, Reifegrad, Bearbeitungszustände usw.. Vorzugsweise ist eine digital gespeicherte topografische Karte die Ausgangsbasis, die an markanten Punkten, wie Kreuzungen und Gebäuden mit bekannten D-GPS-Koordinaten ausgerichtet ist. Alle weiteren gebäudezustand- und bearbeitungsspezifischen Karteninformationen werden in beliebig vielen weiteren Schichtendateien nach Art einer Multilayertechnik aufbereitet gehalten. Die einzelnen Schichten sind besonderen Themen, insbes. bestimmten Betriebszuständen der Bearbeitungsgeräte, zugeordnet. Beispielsweise sind je Schicht die Schlaggrenzen, die Straßen, die Bebauungen, die Höhenlinien, die Steigungen, die Bepflanzungen, die Gewässer, der Ernteertrag, der Düngezustand, die Bodenfeuchte usw. abgespeichert. Auch bestimmte Kombinationen solcher Kartenoverlay-Schichten können in einer Hilfsschicht gespeichert gehalten werden, was bei häufigem Zugriff Aufbereitungszeit erspart. Die Art der Grenzlinien und Hindernisse sind jeweils in der Kartendarstellung symbolhaft gekennzeichnet oder mit Flurbezeichnungen oder dergleichen verknüpft. Im Bearbeitungsbetrieb wird außerdem die Grenze der bereits bearbeiteten Feldbereiche zur unbearbeiteten Fläche vorgehalten, wozu die jeweils bearbeiteten Flächen in bekannter Weise laufend erfaßt und in der Kartendatei im Kartendatenspeicher abrufbereit abgelegt werden.

Um dem Bediener laufend eine möglichst den Betriebsverhältnissen angepaßte Leitinformation zu bieten, wird die vorgehaltene umfangreiche Information zur Kartendarstellung selektiv, thematisiert genutzt, indem aus ihr bei Straßenfahrten Straßenkarteninformationen entnommen werden und bei Geländefahrten die dafür relevanten Geländeinformationen entnommen und aufbereitet werden. Darüberhinaus werden diese Informationen abhängig von einer durch den Beobachter getroffene Wahl und insbesondere automatisch von Betriebs- oder Fahrparametern abhängig ausgewählt und verdichtet oder hervorgehoben zur Darstellung gebracht. Beispielsweise wird für die Auswahl der Kartendetails eine Hubwerkposition, eine jeweilige Zapfwellendrehzahl eine Endgeschwindigkeitsvorwahl eine Getriebeschalthebelposition oder dergleichen ermittelt und ins Bild ausgegeben.

Beispielsweise wird der Kartenmaßstab abhängig von der Fahrgeschwindigkeit so gewählt, daß bei höherer Geschwindigkeit ein größerer Überblick über einen größeren Kartenausschnitt bei geringerer Detailtreue und bei niedriger Geschwindigkeit ein stark vergrößerter Ausschnitt mit letzten Details dargestellt ist. Beim Bearbeitungsbetrieb wird insbesondere dann die Grenze zum bearbeiten Feldbereich besonders hervorgehoben, wenn die Bearbeitung keine deutlich sichtbaren Spuren hinterläßt, z.B. bei der Ausbringung von Spritzmitteln.

Die in bekannten technisch zu nutzenden, aus sogenannten Ertragskarten gewonnenen, Bearbeitungskarten enthaltenen Daten über die auf den einzelnen Ackerstücken auszubringenden Mengen von Düngern, Spritzmitteln oder dergleichen werden, soweit sie verfügbar sind, i.a. nur in der Weise beschränkt zur kartografischen Darstellung gebracht, soweit sie zu automatischen oder händischen Steuerung verwandt werden, da deren ganze Datenfülle dem Bediener auf dem Bildschirm präsentiert eher störend als hilfreich wäre.

Soweit ein Bearbeitungsplan bezüglich der Reihenfolge abzufahrender Bearbeitungsbahnen in einer Bearbeitungskartendatei vorbereitet ist, wird die darzustellenden Karteninformation zweckmäßig immer nur auf einen Bereich entlang der jeweilig befahrenen Bahn allenfalls zusammen mit einer begrenzten Nachbarschafts-Bereichsinformation zur Darstellung gebracht.

Ins Kartenbild werden vorteilhaft jeweils datenbankgemäß vorgegebene und von Hand einzustellende Betriebsdaten eingesetzt, insbes. dort, wo die Geschwindigkeit oder eine Maschinendrehzahl, eine Ausbringungsmenge, die Schnitthöhe usw. geändert werden soll oder ein Arbeitsstatus zu ändern ist.

Weiterhin werden verfügbare meteorologische Daten in kartengrafisch aufbereiteter Form in die Bilddarstellung eingebracht, soweit diese für die jeweils vorgesehene Bearbeitung relevant sind. Insbesondere bei Spritzarbeiten ist z.B. die Windrichtung bedeutsam oder bei Aussaat- und Erntearbeiten ist die Bodenfeuchtigkeit für die Arbeitsqualität ausschlaggebend, also nützlich dazustellen. Aufgrund dieser Karteninformation kann der Bediener eine günstige Fahrtrichtung und einen günstigen Fahrweg wählen, wobei z.B. die trockeneren Feldbereiche zuerst abgefahren werden, so daß die feuchteren bis zur Bearbeitung noch nachtrocknen können.

Die Darstellungen der kartografischen Objekte und die Kennzeichnung der verschiedenen Informationsarten werden im Bild vorzugsweise mit unterschiedlichen Farben und/oder mit Piktogrammen symbolhaft oder mit Strukturierungen, Höhenlinien, Vektoren etc. vorgenommen. Die Piktogramme sind in einer Datei gespeichert und werden von Hinweisen, die in den Kartenspeichern enthalten sind, ins Bild gerufen. Diese Hinweise sind zweckmäßig mit Selektions- und/oder Relevanzschlüsseln verknüpft, die angeben, bei welchen Betriebszuständen und/oder ab welchem Kartenmaßstab sie jeweils zu berücksichtigen sind. Dadurch gelingt es auf einfache Weise, die Übersichtskarten mit kleinen Andeutungen und die Ausschnittskarten zunehmend mit Details zu versehen.

Auch die darzustellenden Linien, die vorzugsweise als Vektordaten gespeichert sind, werden zweckmäßig mit Relevanzfaktoren versehen gespeichert, so daß je nach dem gewählten Maßstab mehr oder weniger bedeutsame Linien, z.B. 20m-Höhenlinen, 10m-Höhenlinien etc. jeweils bei zunehmender Detaillierung dargestellt werden. Selbstverständlich können auch rastermäßig gespeicherte Topologien entspechend umgesetzt werden.

Eine ander Art, eine Informationsvereinfachung für die Übersichtskartendarstellung vorzunehmen, ist es, die Datenfülle der allumfassenden Detaildarstellung durch einen Kompressionsalgorithmus dem Maßstab gemäß geeignet zu verringern.

Zur Vereinfachung der Orientierung des Bedieners auf dem dargestellten Kartenbild wird dessen Ausrichtung auf dem Bildschirm zweckmäßig auf die jeweilige Fahrtrichtung abgestellt und der jeweilige Bildausschnitt nach dem Ort des Fahrzeuges bestimmt, so daß im wesentlichen der unmittelbar folgend zu befahrende Geländeabschnitt gut sichtbar ist. Im einfachsten Fall ist also das Fahrzeug selbst im unteren oder zentralen Bildbereich zu sehen und die Fahrtrichtung nach oben orientiert.

Im weiteren ist eine Verbesserung der Orientierung im Bereich einer Wendeschleife dadurch erreicht, daß der ganze Wendebereich, das Vorgewende, jeweils während eines Wendemanövers in gleicher Darstellung gezeigt wird und der Fahrzeugstandort und die Fahrtrichtung jeweils darin laufend angezeigt werden. Erst nach Beendigung des Wendens wird die neue zu befahrende Bearbeitungsbahn von unten nach oben orientiert im Kartenbild gezeigt, worauf anschließend der Bildausschnitt schrittweise oder quasikontinuierlich von der Fahrgeschwindigkeit abhängig dargestellt wird. Zweckmäßig sind die Informationen der Übersichtskarte und des jeweiligen Kartenausschnitts quasi parallel aufbereitet verfügbar gehalten, so daß zwischen beiden Kartenbildern bei Bedarf ohne längeren Zeitbedarf umgeschaltet werden kann, wenn es der Bediener für notwendig erachtet und veranlaßt oder eine vorgewählte Umschaltgeschwindigkeit durchschritten wird.

Werden die zur Darstellung benötigten Daten, z.B. Wetterkartendaten, Bearbeitungsdaten, Topographiedaten etc. in unterschiedlichen Dateien in externen Stationen vorgehalten, so werden diese entweder vom Bildschirm-Betriebsrechner auf dem Fahrzeug per Datenfunk von den Stationen artspezifisch ausgewählt abgerufen oder über eine Zentralstation zusammengetragen und dann an das Fahrzeug übertragen. Die Kombination der Daten aus den verschiedenen Dateien erfolgt entweder im Betriebsrechner des Bildschirmes oder in der Zentralstation. Bei der Übertragung sind die Daten zweckmäßig komprimiert, und deren Expansion erfolgt dann im Bildschirm-Betriebsrechner mittels eines Bildaufbereitungsprogrammes durch Codierung der Farben, Umsetzung der Vektoren und Einsetzen der grafischen Zeichen und Piktogramme aus den zugehörigen Hilfdateien in bekannter Weise. Geeignete Programme für diese Prozeßschritte und unter Umständen für deren Durchführung nutzbare Hardware sind i.a. als Grafikpostprozessoren bezeichnet.

Digital gespeicherte Kartendarstellungen geben den erfaßten Raum nur modellhaft wieder. Da sie die Realität nur beschränkt wiedergeben, sind sie zweckmäßig thematisiert. Im allgemeinen ist eine gerasterte Darstellung der horizontalen Oberflächenprojektion gewählt, wobei den Rasterpunkten Informationen über die dortigen Verhältnisse, z.B. die Höhenlage, einen Grenzverlauf, die oberflächenart etc. gespeichert sind. Alternativ oder ergänzend sind Vektoren der beschreibenden Funktionslinien oder Gradientenwerte der Eigenschaften dort abgespeichert.

Vorteilhaft läßt sich auch eine 3D-Geländedatenbank oder eine digitale Luftbildkartendatei als Datenbasis verwenden. Bei ausreichender Prozessorleistung wird daraus ein realitätsnahes Szenenbild errechnet und aus der Sicht des Fahrers oder einer anderen Beobachterposition betrachtet generiert und auf dem Bildschirm präsentieret. Um die Realitätsnähe zu erhöhen, wird vorteilhaft die Neigung des Geländes am Fahrzeugort gemäß der Datenbankinformation oder gemäß Neigungssensorangaben am Fahrzeug bei der Erzeugung des Szenenbildes durch entsprechende drehende Koordinatentransformationen berücksichtigt.

Abhängig von der Betriebsart, z.B. von der Geschwindigkeit, der Zapfwellendrehzahl, der Hubwerkposition, der Getriebevorwahl etc., die laufend am Fahrzeuge ermittelt werden, sind nur bestimmte Informationen für die Darstellung relevant. Deshalb werden beispielsweise im Straßenfahrbetrieb die Straßenverläufe und Verkehrsinformationen sowie die Wegebefahrbarkeit aus der Datenvielfalt ausgewählt, jedoch im Geländebetrieb Informationen zur Bodenbearbeitung, zum Fahrweg und Grenzverlauf, zum Geländeverlauf und zur Bodenbeschaffenheit sowie ggf. die Wetterinformationen ausgewählt; Einzelheiten zum Straßennetz sind beim Geländebetrieb jedoch irrelevant und werden von der Darstellung ausgeschlossen.

Aufgrund der Datenübertragung zwischen den Rechnerstationen lassen sich auch die Daten des jeweils dargebotenen Bildes zu anderen Stationen, z.B. an einen Hofrechner, übertragen und dort sichtbar machen, so daß dort Betriebs-Problemfälle realistisch beurteilt werden und Korrekturanweisungen dem Fahrer per Funk oder ins Bild gestellt erteilt werden können.

Figuren 1 bis 3 zeigen ein System und Beispiele zur Verwirklichung des Verfahrens.
- Fig. 1: zeigt ein Agrarfahrzeug mit einem Schema der Vorrichtung und des Informationssystems;
- Fig. 2: zeigt ein Beispiel einer Gelände-Kartendarstellung;
- Fig. 3: zeigt einen vergrößerten Ausschnitt zu Fig. 2 bei niedrigerer Geschwindigkeit.

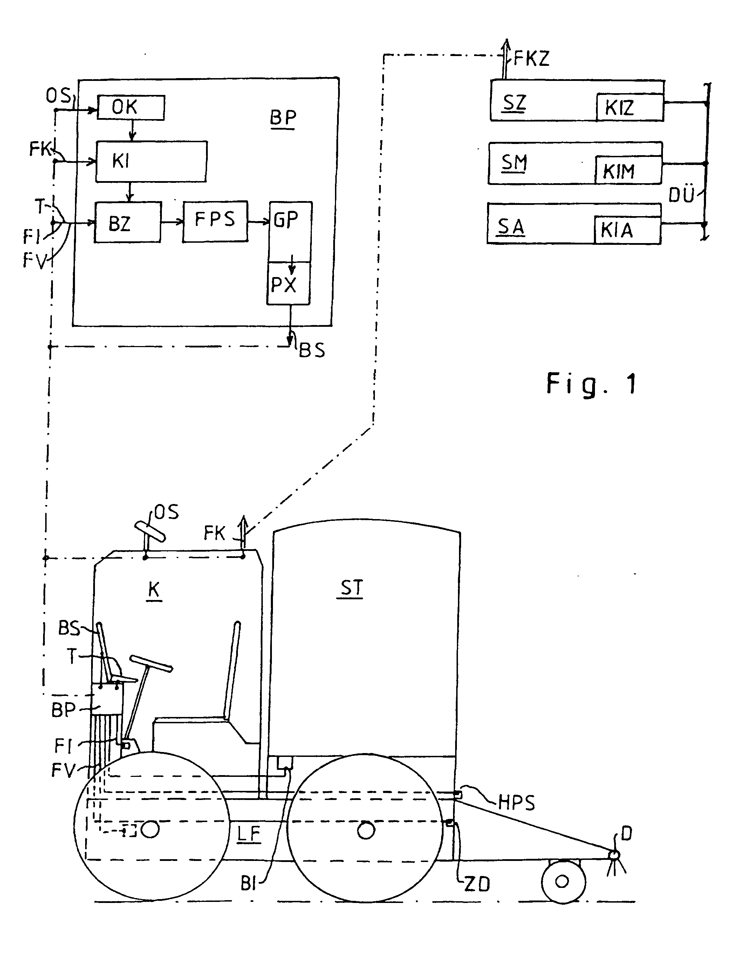

Das Agrarfahrzeug (LF) ist in Figur 1 beispielsweise ein Geräteträgerfahrzeug mit einer Bedienungskanzel (K), einem Sprühmitteltank (ST) und einem verschwenkbaren Spritzgestänge (D). In der Kanzel (K) ist der Bildschirm (BS) und eine Tastatur (T) vor dem Fahrerplatz angeordnet. Der Bildschirmbetriebsrechner (BP) ist schematisiert herausgezeichnet. Er enthält einen Grafikprozessor (GP), der den Bildschirm (BS) treibt. Von der Tastatur (T) gehen Steueranweisungen an den Rechner; von dem Fahrwerk wird ein Fahrzeuggeschwindigkeitssignal (FV) und von einem Richtungssensor wird ein Fahrtrichtungssignal (FI) und vom Spritzgerät werden Betriebsartensignale, wie eine Betriebsmittelinformation (BI), ein Hubpositionssignal (HPS) und/oder eine Zapfwellendrehzahl (ZD), in den Betriebsrechner (BP) geleitet. Außerdem werden die Ortungssignale eines D-GPS-Ortungssystems (OS), das mit Hilfe von Satellitensignalen und Bodenstationssignalen in bekannter Weise arbeitet und Koordinaten, Höhe und Richtung laufend angibt, empfangen und im Betriebsrechner (BP) zur Bestimmung der jeweiligen Ortskoordinaten (OK) genutzt, die zur Adressierung der Speicher der Karteninformationen (KI, KIM, KIA, KIZ) dient. Diese sind im Beispiel im Betriebsrechner (BP) selbst als auch in externen Stationen (SM, SA, SZ) gehalten. Dies sind beispielsweise eine meteorologische Station (SM), eine agrarwissenschaftliche Station (SA) und eine Zentralstation (SZ) als Basisstation oder sogenannter Hofrechner, die miteinander über ein Datenübertragungsnetz (DÜ) kommunizieren können.

Die Kommunikation der Zentralstation (SZ) mit dem Betriebsrechner (BP) geschieht über einen Funktdatenübertragungskanal (FK-FKZ). Dem Raster des jeweils darzustellenden Kartenbildes entsprechend wird im Bereich der jeweiligen Ortskoordinaten die Katasterinformation der gespeicherten Geländeinformationen ausgelesen und mit dem Inhalt des Farb-, Piktogramm- und Symbolspeicher (FPS), gesteuert durch den Inhalt des Betriebszustandsspeichers (BZ), verknüpft und über einen Pixelspeicher (PX) dem Bildschirm (BS) zugeführt. Der Betriebszustand ist aus den Tastatureingaben, dem Fahrgeschwindigkeitssignal (FV) und weiteren Betriebs- und Zustandsmeldungen des Fahrzeuges und der Sprühvorrichtung, wie der Hubposition des Sprühgestänges, der Zapfwellendrehzahl (ZD), der Betriebsmittelinformation (BI) gebildet. Daraus läßt sich ein Arbeits- und Wendevorgang, die Arbeitsbreite etc. entnehmen und damit die Auswahl der Bildinformation gesteuert bestimmt.

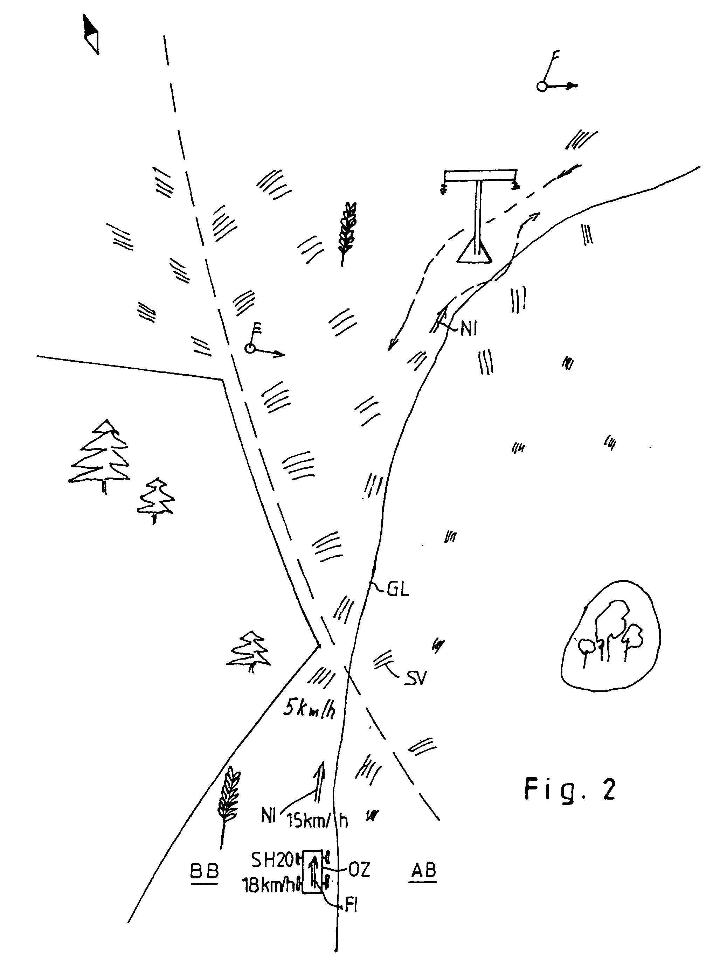

Figur 2 zeigt auf dem Bildschirm eine schematisierte Geländeskizze, nahe deren unteren Rand ein Fahrzeugsymbol als Ortsanzeiger (OZ) dargestellt ist, der ein Fahrtrichtungszeiger (FI) trägt, der aufgrund der vorgenommenen Kartenorientierung nach oben zeigt. Im Gelände sind Grenzlinien (GL) eines Feldausschnittes zu sehen, in dem ein als bereits bearbeitet gekennzeichneter Abschnitt (AB) rechts von der Fahrtroute liegt, die durch eine als Doppelpfeil symbolisierte Navigationsinformation (NI) mit der momentanen Fahrzeuggeschwindigkeit von 15 km/h gekennzeichnet ist. Steigungsvektoren (SV) zeigen Geländeunebenheiten und den Verlauf eines Grabens an, vor dem ein Geschwindigkeitshinweis - 5 km/h - angebracht ist. Eine symbolische Kompaßnadel zeigt die Nordrichtung und Windrichtungszeiger zeigen die lokale Stärke und Richtung des Windes an. Der mit einem Tannenpiktogramm symbolisierte Wald neben dem zu bearbeitenden Feld (BB) leitet an seiner Nordgrenze den Wind verstärkt auf das Feld, was dort entsprechend symbolisch gekennzeichnet ist. Neben dem Fahrzeugsymbol ist die momentan empfohlene Schnitthöhe (SH) zu 20 cm angegeben und die Höchstgeschwindigkeit von 18 km/h.

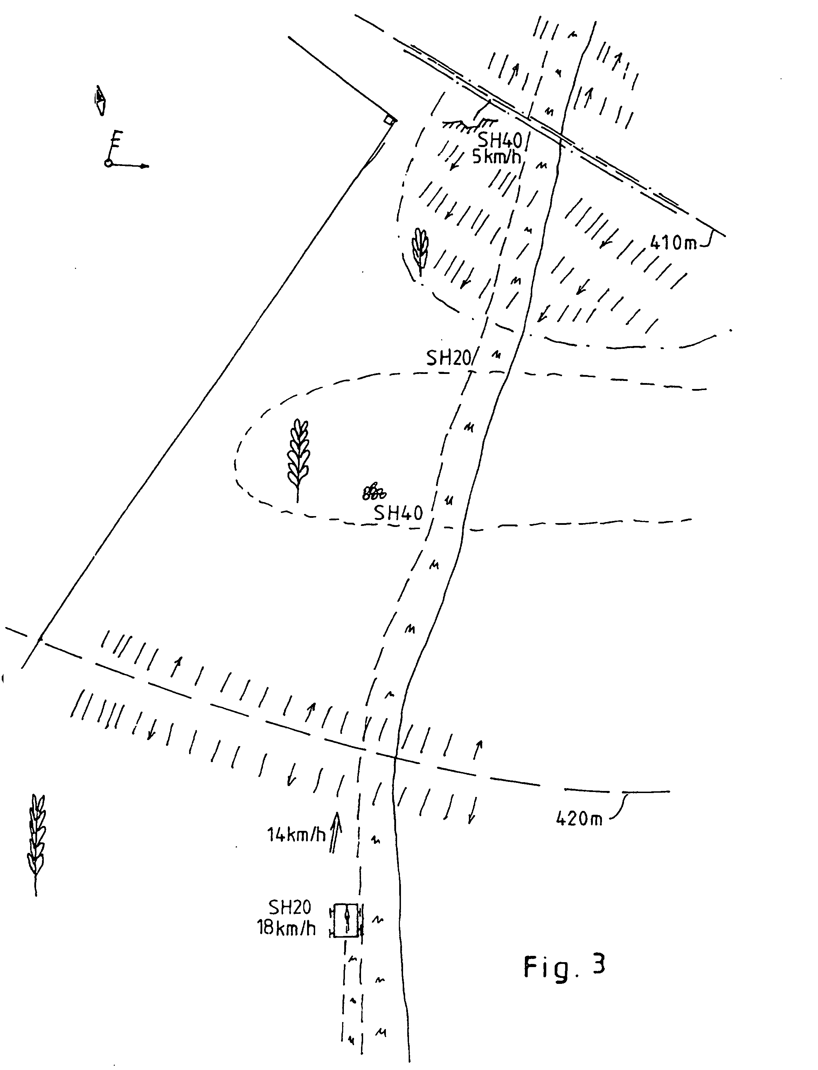

Figur 3 zeigt den Kartenausschnitt bei niedrigerer Fahrgeschwindigkeit, die mit 14 km/h angegeben ist, und zu einer stärkeren Vergrößerung des Kartenausschnitts führt, wobei mehr Details angegeben sind. So sind zusätzliche Steigungsvektoren und Höhenlinien mit Höhenangaben, die bereits bearbeiteten Schneisen als Stoppelfeld und ein steiniges Feldgebiet mit einem Steinhaufen symbolisiert und mit einer empfohlenen größeren Schnitthöhe (SH) von 40 cm dargestellt. Der auf 410 mm uber NN liegende Grabenquerschnitt ist symbolhaft dargestellt. Der Westhang des Grabens hat einen niedrigeren Ertragswert und niedrigere Halmhöhe, was durch die kleinere Ähre symbolisiert ist.

Die Schnitthöhe (SH) ist demgemäß mit 20 cm niedriger als im benachbarten Steinland angegeben. Die Breite des bearbeiteten Streifens hinter dem Fahrzeugsymbol ist maßstabsgerecht gezeigt und real z.B. 8 m breit. Die betriebs- und fahrtechnischen Angaben sind nur entlang der Bearbeitungsroute plaziert. Die Topologie, die Bearbeitungsschneise, die Bodenbeschaffenheit und die Ertragssituation sowie die Windangabe sind jeweils aus den verschiedenen spezifischen Dateien superponiert und für eine Erntemaschine ausgewählt interpretiert, d.h. in lokale Geschwindigkeits- und Schnitthöhenempfehlungen umgesetzt.

## Patentansprüche

1. Verfahren für eine programmgesteuerte Darstellung eines elektronischen Kartenbildes auf einem Bildschirm (BS) eines Kraftfahrzeuges, das ein Ortungssystem (OS) zu einer jeweiligen Fahrzeugortsbestimmung und ggf. ein Orientierungssystem zu dessen jeweiliger Fahrtrichtungsbestimmung und/oder einen Bildschirm-Betriebsrechner (BP) umfasst, der unmittelbar oder über einen Funkdatenübertragungskanal (FK) Zugriff auf Karteninformationen (KI) hat und auf diese abhängig vom jeweils bestimmten Fahrzeugort zugreift und zu der Kartenbilddarstellung aufbereitet, in die jeweils ein Ortsanzeiger (OZ) und ggf. eine Navigationsinformation (NI) eingebracht werden,
**dadurch gekennzeichnet,**
**dass** die Karteninformation (KI) fahrtechnische und/oder bearbeitungstechnische Daten des zu befahrenden und/oder zu bearbeitenden Geländes beinhaltet und diese Daten jeweils abhängig von jeweiligen Betriebsparametern (FI, FV, BI, HPS, ZD) des Fahrzeuges automatisch selektiv zu der jeweiligen ortsbezogenen Kartenbilddarstellung aufbereitet werden und wobei die Karteninformation (KI) in mehreren funktionsspezifischen Kartendatenbanken enthalten ist, auf die für die Aufbereitung des Kartenbildes betriebsbedingt ausgewählt jeweils zugegriffen wird und deren Inhalte mit Betriebsparametern gesteuert zum Kartenbild subpositioniert werden.

2. Verfahren nach Anspruch 1, **dadurch gekennzeichnet, daß** als die Karteninformation (KI) Straßenverläufe, Straßenbefahrbarkeitsdaten, Schlag- und Feldgrenzenverläufe, Hindernisse, wie Gräben, Mauern und/oder Hecken, Daten befahrbarer und unbefahrbarer Geländearten sowie Höhen- oder Steigungsdaten, Fruchtart, Reifegrad und/oder Bearbeitungszustände gehalten werden.

3. Verfahren nach Anspruch 1 oder 2, **dadurch gekennzeichnet, daß** als die Karteninformation (KI) weiterhin Fahrzeug- oder Maschineneinstellungen für eine Agrarbearbeitung des jeweils befahrenen Geländes, wie Fahrgeschwindigkeit, Maschinendrehzahlen, Ausbringungsmengenstrom eines Dünge- oder Spritzmittels und/oder einen empfohlenen Fahrweg, gehalten werden.

4. Verfahren nach einem der Ansprüche 1 bis 3, **dadurch gekennzeichnet, daß** als die Karteninformation (KI) weiterhin aktuelle lokale meteorologisch bestimmte Daten, wie Windrichtung, Bodenfeuchtigkeit und/oder Sonneneinstrahlung, gehalten werden.

5. verfahren nach Anspruch 4, **dadurch gekennzeichnet, daß** die Kartendatenbanken (KIZ, KIM, KIA) in mehreren räumlich getrennten Stationen gehalten werden, die untereinander in Datenübertragungsverbindungen (DÜ), insbesondere mit einer Funkdatenübertragungsverbindung (FK-FKZ), zu dem Bildschirm-Betriebsrechner (BP) stehen und auf die Kartendatenbanken (KIZ, KIM, KIA) vom Bildschirm-Betriebsrechner (BP) betriebsartabhängig und ortsbezogen zugegriffen wird.

6. verfahren nach einem der vorstehenden Ansprüche, **dadurch gekennzeichnet, daß** in einer Straßenfahrbetriebsart die lokalen Straßenverläufe und Straßenbefahrbarkeitsdaten zum Kartenbild aufbereitet werden, und daß in einer Geländefahrbetiebsart die Schlag- und Feldgrenzen, Hindernisse, Geländearten, Höhen- und/oder Steigungsverläufe, zum Kartenbild aufbereitet werden und in einer Bearbeitungsbetriebsart abhängig von der jeweiligen vorgegebenen Bearbeitungsart aus den verfügbaren zugehörigen Kartenarten und deren Kartendaten lokal einzustellende betriebsartspezifische Betriebsparameter, wie flächenspezifische Ausbringmengen, Fahrgeschwindigkeit, Maschinendrehzahlen, Schnitthöhe, Bearbeitungswege und/oder -fahrtrichtungen, sowie Vorgewende aufbereitet werden und die aufbereiteten Daten jeweils zur Darstellung gebracht werden.

7. Verfahren nach einem der vorstehenden Ansprüche, **dadurch gekennzeichnet, daß** während des Bearbeitungsbetriebes abhängig von einer ermittelten Fahrgeschwindigkeit einer jeweiligen Arbeitsbreite einer Hubwerkposition, einer Zapfwellendrehzahl, einer Endgschwindigkeitsvorwahl, einer jeweiligen Getriebeschalthebelstellung und/oder anderen Betriebsparametern Bearbeitungskartendaten, insbes. Ertrags- und Fertilitätskartendaten, erhoben und funktionsspezifisch formiert in eine Bearbeitungsdatenbank gespeichert werden und zum Kartenbild aufbereitet werden, wobei insbesondere eine Bearbeitungsgrenze zum bereits bearbeiteten Gelände in das Kartenbild laufend eingetragen wird und ein momentaner Bearbeitungstreifen laufend in die Karte und in eine zugehörige Bearbeitungs-Kartendatei eingetragen wird.

8. Verfahren zur Kartenbilddarstellung nach einem der vorstehenden Ansprüche, **dadurch gekennzeichnet, daß** dem Bildschirm-Betriebsrechner mindestens ein Betriebsparameter, z.B. die Fahrzeuggeschwindigkeit (PV) eine Hubwerkposition, eine Zapfwellendrehzahl, eine Endgeschwindigkeitsvorwahl und/oder eine jeweilige Getriebehebelstellung, laufend zugeführt wird und abhängig davon die Karteninformation (KI) im Maßstab und bezüglich der Auswahl und/oder Darstellungsweise der kartografischen Objekte ausgewählt aufbereitet wird.

9. Verfahren zur Kartenbilddarstellung nach Anspruch 8, **dadurch gekennzeichnet, daß** der Maßstab des Kartenbildes geschwindigkeitsabhängig so bestimmt wird, daß ein um so kleinerer Ausschnitt entsprechend größer expandiert dargestellt wird, je geringer die Fahrgeschwindigkeit (FV) ist.

10. Verfahren zur Kartenbilddarstellung nach Anspruch 8 oder 9, **dadurch gekennzeichnet, daß** die Karteninformation (KI) mit dem Inhalt einer Farb-, Piktogramm- und/oder Symboldatenbank verknüpft wird und die darin gespeicherten Farben-, Piktogramme und/oder Symbole an den der Katasterinformation (KI) entsprechenden Positionen in das Kartenbild eingetragen werden.

11. Verfahren zur Kartenbilddarstellung nach einem der Ansprüche 8 bis 10, **dadurch gekennzeichnet, daß** die Karteninformation (KI) und/oder die Farb-, Piktogramm- und/oder Symboldatenbank jeweils zugeordnete Relevanzschlüssel und/oder Selektionsschlüssel enthält, durch die festgelegt ist, bei welcher Betriebsart und abhängig von welchem Betriebsparameter die Farben-, Piktogramme und/oder Symbole oder anderen kartografischen Objekte, wie Höhenlinien oder Steigungsmarkierungen, in das Kartenbild einzubringen sind.

12. Verfahren zur Kartenbilddarstellung nach Anspruch 11, **dadurch gekennzeichnet, daß** die Größe und/oder Art der Piktogramme und/oder Symbole dem jeweiligen Kartenbild maßstabgemäß durch entsprechende Auswahl oder eine Größen-Transformation angepaßt wird.

13. Verfahren zur Kartenbilddarstellung nach einem der Ansprüche 8 bis 12, **dadurch gekennzeichnet, daß** eine maßstabgerechte Transformation des Kartenbildes mit den Farben, Linien, Piktogrammen und/oder Symbolen aus punktuell gespeicherten digitalen Karteninformationen (KI) in einem Grafikpostprozessor (GP) erfolgt.

14. Verfahren zur Kartenbilddarstellung nach Anspruch 12 oder 13, **dadurch gekennzeichnet, daß** dem Bildschirm-Betriebsrechner (BP) laufend eine Fahrtrichtungsinformation (FI) zugeführt wird, dergemäß dieser oder der Grafikprozessor (GP) die Karteninformation (KI) laufend derart aufbereitet, daß im Kartenbild die Fahrtrichtung etwa von unten nach oben orientiert ist.

15. Verfahren zur Kartenbilddarstellung nach Anspruch 14, **dadurch gekennzeichnet, daß** jeweils während eines Wendemanövers das Kartenbild unverändert auf dem Bildschirm gehalten wird und dabei nur der angezeigt Fahrzeugort und ggf. eine Fahrtrichtungsanzeige laufend berichtigt eingetragen werden.

16. Verfahren zur Kartenbilddarstellung nach Anspruch 14, **dadurch gekennzeichnet, daß** die Kartenbildinformation jeweils so bezüglich des Fahrzeugortes ausgewählt wird, daß dieser sich in der unteren Bildhälfte, insbes. nahe des unteren Bildrandes, befindet.

17. Verfahren zur Kartenbilddarstellung nach einem der vorstehenden Ansprüche, **dadurch gekennzeichnet, daß** wenn einen tatsächlichen Betriebszustand übersteuernd durch eine Bedienungsanweisungen, insbesondere über eine Tastatur (T), ein anderer Betriebszustand dem Bildschirm-Betriebsrechner (BP) vorgeben wird, diesem gemäß die Steuerung der Aufbereitung und Darstellung der Kartenbildinformation erfolgt.

18. Verfahren zur Kartenbilddarstellung nach Anspruch 17, **dadurch gekennzeichnet, daß** jeweils ein Übersichtskartenbild und ein der Fahrzeuggeschwindigkeit (FV) gemäß gewählter Kartenbildausschnitt aufbereitet gespeichert gehalten werden und abhängig von einer Bedieneranweisung, insbes. über die Tastatur (T), eines der beiden Kartenbilder auf dem Bildschirm (BS) zur Darstellung gebracht wird.

19. Verfahren zur Kartenbilddarstellung nach einem der vorstehenden Ansprüche, **dadurch gekennzeichnet, daß** als eine der Karteninformationen (KI) ein digitalisiertes Luftbild dient.

20. Verfahren zur Kartenbilddarstellung nach einem der vorstehenden Ansprüche, **dadurch gekennzeichnet, daß** als eine der Karteninformationen (KI) eine digital gespeicherte 3D-Kartendarstellung dient, aus der vom jeweiligen Fahrzeugstandort aus abhängig von der dortig kartierten Geländeneigung und/oder von am Fahrzeug gemessenen Neigungen eine Umsetzung in ein realitätsnahes Geländebild aus einer Fahrersicht oder aus einer jeweils vorgegebenen Position erfolgt und zur Darstellung gebracht wird.

21. Verfahren zur Kartenbilddarstellung nach einem der vorstehenden Ansprüche, **dadurch gekennzeichnet, daß** das jeweilige Karten- oder Geländebild vom Bildschirm-Betriebsrechner (BP) zu einer anderen Station (SZ, SM, SA) übertragen wird.

## Claims

1. A method of program-controlled representation of an electronic map image on a screen (BS) of a motor vehicle which includes a positioning system (OS) for determining a respective vehicle position and possibly an orientation system for determining the respective direction of travel thereof and/or a screen operating computer (BP) which has access to items of map information (KI) directly or by way of a radio data transmission channel (FK) and accesses same in dependence on the respectively determined vehicle position and processes same for the map image representation into which are respectively introduced a position indicator (OZ) and possibly an item of navigational information (NI),
**characterised in that**
the map information (KI) includes travel-related and/or working-related data in respect of the terrain to be travelled and/or worked and said data are respectively automatically processed selectively in dependence on the respective operating parameters (FI, FV, BI, HPS, ZD) of the vehicle to afford the respective position-related map image representation and wherein the map information (KI) is contained in a plurality of function-specific map databases which are respectively accessed in selected fashion governed by the operation involved for processing of the map image and the contents of which are subpositioned controlledly with operating parameters in relation to the map image.

2. A method according to claim 1 **characterised in that** road configurations, road negotiability data, cut and field boundary configurations, obstacles such as ditches, walls and/or hedges, data in respect of negotiable and non-negotiable kinds of terrain and altitude and gradient data, crop type, degree of maturity and/or working conditions are held as the map information (KI).

3. A method according to claim 1 or claim 2 **characterised in that** vehicle or machine settings for agricultural working of the terrain being respectively negotiated such as travel speed, machine rotary speeds, quantitative discharge flow of a fertilising or spraying means and/or a recommended route are also held as the map information (KI).

4. A method according to one of claims 1 to 3 **characterised in that** current local meteorologically determined data such as wind direction, ground moisture content and/or solar radiation are also held as the map information (KI).

5. A method according to claim 4 **characterised in that** the map databases (KIZ, KIM, KIA) are held in a plurality of spatially separate stations which are related to each other in data transmission connections (DU), in particular with a radio data transmission connection (FK-FKZ) to the screen operating computer (BP) and the map databases (KIZ, KIM, KIA) are accessed by the screen operating computer (BP) in dependence on the mode of operation and in relation to position.

6. A method according to one of the preceding claims **characterised in that** in an on-road travel mode the local road configurations and road negotiability data are processed to form the map image and that in an off-road operating mode the cut and field boundaries, obstacles, types of terrain, altitude and/or gradient configurations are processed to afford the map image and in a working mode in dependence on the respectively predetermined kind of working operating mode-specific operating parameters which are to be locally set such as area-specific discharge amounts, travel speed, machine rotary speeds, cutting height, working routes and/or directions of travel and advance turns are processed from the available associated kinds of maps and the map data thereof and the processed data are respectively displayed.

7. A method according to one of the preceding claims **characterised in that** during the working mode in dependence on an ascertained travel speed, a respective working width and a lift mechanism position, a power take-off shaft speed, a final speed preselection, a respective gear shift lever position and/or other operating parameters working map data, in particular yield and fertility map data, are acquired and stored in function-specific form in a working database and are processed to afford the map image, wherein in particular a working boundary in relation to the terrain which has already been worked is continuously inputted into the map image and a current working strip is continuously inputted into the map and into an associated working map data file.

8. A method of map image representation according to one of the preceding claims **characterised in that** at least one operating parameter, for example the vehicle speed (PV), a lift mechanism position, a power take-off shaft speed, a final speed preselection and/or a respective transmission lever position is continuously fed to the screen operating computer and in dependence thereon the map information (KI) is processed selected in respect of scale and in respect of the selection and/or mode of representation of the cartographic objects.

9. A method of map image representation according to claim 8 **characterised in that** the scale of the map image is so determined in dependence on speed that a section which is correspondingly smaller is represented on a correspondingly more greatly expanded scale, the lower the travel speed (FV) is.

10. A method of map image representation according to claim 8 or claim 9 **characterised in that** the map information (KI) is linked to the content of a colour, pictogram and/or symbol database and the colours, pictograms and/or symbols stored therein are entered into the map image at the positions corresponding to the land register information (KI).

11. A method of map image representation according to one of claims 8 to 10 **characterised in that** the map information (KI) and/or the colour, pictogram and/or symbol database contains respectively associated relevance keys and/or selection keys for establishing in which operating mode and in dependence on which operating parameters the colours, pictograms and/or symbols or other cartographic objects such as contour lines or gradient markings are to be introduced into the map image.

12. A method of map image representation according to claim 11 **characterised in that** the size and/or nature of the pictograms and/or symbols is adapted to the respective map image in respect of scale by suitable selection or size transformation.

13. A method of map image representation according to one of claims 8 to 12 **characterised in that** transformation according to scale of the map image with the colours, lines, pictograms and/or symbols from digital map information (KI) stored in point form is effected in a graphic post-processor (GP).

14. A method of map image representation according to claim 12 or claim 13 **characterised in that** an item of travel direction information (FI) is continuously fed to the screen operating computer (BP), in accordance with which same or the graphic processor (GP) continuously processes the map information (KI) in such a way that the direction of travel is oriented approximately from bottom to top in the map image.

15. A method of map image representation according to claim 14 **characterised in that** during a respective turning manoeuvre the map image is kept unchanged on the screen and **in that** situation only the displayed vehicle position and optionally a vehicle direction display are continuously entered in corrected form.

16. A method of map image representation according to claim 14 **characterised in that** the map image information is respectively so selected with respect to the vehicle position that it is in the lower half of the screen, in particular near the lower edge thereof.

17. A method of map image representation according to one of the preceding claims **characterised in that** when, overriding an actual operating condition, another operating condition is preset for the screen operating computer (BP) by an operating instruction, in particular by way of a keyboard (T), control of processing and representation of the map image information is effected in accordance therewith.

18. A method of map image representation according to claim 17 **characterised in that** a respective overview map image and a map image section selected in accordance with the vehicle speed (FV) are held in processed and stored form and one of the two map images is represented on the screen (BS) in dependence on an operating instruction, in particular by way of a keyboard (T).

19. A method of map image representation according to one of the preceding claims **characterised in that** a digitised aerial image serves as one of the items of map information (KI).

20. A method of map image representation according to one of the preceding claims **characterised in that** one of the items of map information (KI) is a digitally stored 3D map representation from which conversion into an image of the terrain which is close to reality from the view of a driver or from a respectively predetermined position is effected from the respective location of the vehicle in dependence on the terrain gradient mapped there and/or gradients measured at the vehicle and is displayed.

21. A method of map image representation according to one of the preceding claims **characterised in that** the respective map or terrain image is transferred by the screen operating computer (BP) to another station (SZ, SM, SA).

## Revendications

1. Procédé pour la visualisation pilotée par programme d'une image cartographiée électronique sur un écran (BS) d'un véhicule à moteur, ledit procédé comprenant un système de repérage (OS) pour la localisation instantanée du véhicule et éventuellement un système d'orientation pour la détermination instantanée de sa direction de déplacement et/ou un ordinateur d'exploitation d'écran (BP) qui a accès à des informations cartographiques (KI) directement ou par l'intermédiaire d'un canal de transmission de données radio (FK) et y accède en fonction de la position déterminée du véhicule à cet instant et les prépare pour la visualisation de l'image cartographiée à laquelle sont intégrés à chaque fois un indicateur de position (OZ) et éventuellement une information de navigation (NI), **caractérisé en ce que** l'information cartographique (KI) contient des données techniques de parcours et/ou de travail sur le terrain à parcourir et/ou à travailler, et ces données sont à chaque fois préparées automatiquement et sélectivement en fonction de paramètres d'exploitation respectifs (FI, FV, BI, HPS, ZD) du véhicule en vue de la visualisation de l'image cartographiée relative à la position concernée, l'information cartographique (KI) étant contenue dans plusieurs banques de données de cartes à fonctions spécifiques qui sont à chaque fois accédées de manière conditionnée par le mode de fonctionnement et sélectionnée en vue de la préparation de l'image cartographiée et dont les contenus sont subordonnés à l'image cartographiée en fonction de paramètres d'exploitation.

2. Procédé selon la revendication 1, **caractérisé en ce que** l'information cartographique (KI) stockée est constituée par des tracés de routes, des données sur la praticabilité des routes, des tracés de limites de parcelles et de champs, des obstacles tels que fossés, mur et/ou haies, des données sur les types de terrains praticables et impraticables ainsi que des données d'altitude et de déclivité, de type de récolte, de degré de maturation et/ou d'états de travail.

3. Procédé selon la revendication 1 ou 2, **caractérisé en ce que** l'information cartographique (KI) stockée est en outre constituée par des réglages de véhicule ou de machine en vue du travail agricole à réaliser sur le terrain parcouru à cet instant, tels que vitesse de marche, vitesse de rotation de la machine, débit d'épandage d'un produit fertilisant ou parasiticide et/ou itinéraire recommandé.

4. Procédé selon une des revendications 1 à 3, **caractérisé en ce que** l'information cartographique (KI) stockée est en outre constituée par des données locales instantanées d'intérêt météorologique, telles que direction du vent, humidité du sol et/ou rayonnement solaire.

5. Procédé selon la revendication 4, **caractérisé en ce que** les banques de données de cartes (KIZ, KIM, KIA) sont stockées dans plusieurs stations spatialement séparées qui communiquent entre elles par l'intermédiaire de liaisons de transmission de données (DÜ), en particulier par l'intermédiaire d'une liaison de transmission de données radio (FK-FKZ) avec l'ordinateur d'exploitation d'écran (BP), et **en ce que** l'ordinateur d'exploitation d'écran (BP) accède aux banques de données de cartes (KIZ, KIM, KIA) en fonction du mode de fonctionnement et de la position concernée.

6. Procédé selon une des revendications précédentes, **caractérisé en ce que**, en mode de déplacement sur route, les tracés des routes locales et les données de praticabilité des routes sont préparés pour les besoins de l'image cartographiée, **en ce que**, en mode de déplacement sur le terrain, les limites de parcelles et de champs, les obstacles, les types de terrains, les variations d'altitude et/ou de déclivité sont préparés pour les besoins de l'image cartographiée en fonction des types de cartes, et, en mode de travail, des paramètres d'exploitation à adopter localement et spécifiques au mode de fonctionnement, tels que quantités d'épandage par unité de surface, vitesse de marche, vitesses de rotation de la machine, hauteur de coupe, trajets et/ou directions de déplacement au cours du travail ainsi que tournières, sont préparés, en fonction du type de travaillé prédéfini à cet instant, à partir des types de cartes associés disponibles ou de leurs données cartographiques, et les données préparées sont chacune visualisées.

7. Procédé selon une des revendications précédentes, **caractérisé en ce que**, en mode de travail, en fonction de la vitesse de marche recueillie, de la largeur de travail instantanée, de la position du mécanisme élévateur, de la vitesse de rotation de l'arbre de prise de force, de la vitesse finale présélectionnée, de la position instantanée du levier de changement de vitesse et/ou d'autres paramètres d'exploitation, des données cartographiques de travail, en particulier des données de rendement et de fertilité, sont collectées, mémorisées dans une banque de données de travail avec une mise en forme adaptée à leur fonction et préparées pour les besoins de l'image cartographiée, en particulier une limite de travail par rapport au terrain déjà travaillé étant intégrée en continu à l'image cartographiée, et une bande de travail instantanée étant intégrée en continu à l'image cartographiée et à un fichier cartographique de travail associé.

8. Procédé pour la visualisation d'une image cartographiée selon une dés revendications précédentes, **caractérisé en ce qu'**au moins un paramètre d'exploitation, par exemple la vitesse du véhicule (PV), la position du mécanisme élévateur, la vitesse de rotation de l'arbre de prise de force, la vitesse finale présélectionnée et/ou la position instantanée du levier de changement de vitesse, est envoyé en continu à l'ordinateur d'exploitation d'écran et, en fonction de celui-ci, l'information cartographique (KI) est préparée à l'échelle et de manière sélectionnée en fonction du choix et/ou du mode de visualisation des objets cartographiques.

9. Procédé pour la visualisation d'une image cartographiée selon la revendication 8, **caractérisé en ce que** l'échelle de l'image cartographiée est déterminée en fonction de la vitesse, de façon que, plus la vitesse de marche (FV) est basse, plus un fragment petit soit visualisé avec un agrandissement correspondant.

10. Procédé pour la visualisation d'une image cartographiée selon la revendication 8 ou 9, **caractérisé en ce que** l'information cartographique (KI) est combinée au contenu d'une banque de données de couleurs, de pictogrammes et/ou de symboles, et les couleurs, pictogrammes et/ou symboles qui y sont contenus sont intégrés à l'image cartographiée aux emplacements correspondants à l'information cartographique (KI).

11. Procédé pour la visualisation d'une image cartographiée selon une des revendications 8 à 10, **caractérisé en ce que** l'information cartographique (KI) et/ou la banque de données de couleurs, de pictogrammes et/ou de symboles contiennent des codes de pertinence et/ou des codes de sélection respectivement associés, lesquels définissent dans quel mode de fonctionnement et selon quel paramètre d'exploitation les couleurs, pictogrammes et/ou symboles ou d'autres objets cartographiques, tels que courbes de niveau ou indications de déclivité, doivent être intégrés à l'image cartographiée.

12. Procédé pour la visualisation d'une image cartographiée selon la revendication 11, **caractérisé en ce que** la taille et/ou le type des pictogrammes et/ou symboles sont adaptés en termes d'échelle à l'image cartographiée correspondante par un choix correspondant ou une transformation dimensionnelle.

13. Procédé pour la visualisation d'une image cartographiée selon une des revendications 8 à 12, **caractérisé en ce que** la transformation à l'échelle de l'image cartographiée avec les couleurs, courbes, pictogrammes et/ou symboles issus d'informations cartographiques (KI) numériques mémorisées ponctuellement s'effectue dans un postprocesseur graphique (GP).

14. Procédé pour la visualisation d'une image cartographiée selon la revendication 12 ou 13, **caractérisé en ce qu'**à l'ordinateur d'exploitation d'écran (BP) est envoyée en continu une information sur la direction de déplacement (FI), en fonction de laquelle celui-ci ou le processeur graphique (GP) prépare l'information cartographique (KI) en continu de façon que, sur l'image cartographiée, la direction de déplacement soit orientée sensiblement de bas en haut.

15. Procédé pour la visualisation d'une image cartographiée selon la revendication 14, **caractérisé en ce qu'**à chaque demi-tour l'image cartographiée est conservée inchangée à l'écran et seule la position affichée du véhicule et éventuellement une indication de direction de déplacement y sont intégrées en étant corrigées en continu.

16. Procédé pour la visualisation d'une image cartographiée selon la revendication 14, **caractérisé en ce que** l'information de l'image cartographiée est à chaque fois choisie en fonction de la position du véhicule, de façon que celui-ci se trouve dans la moitié inférieure de l'image, en particulier près du bord inférieur de l'image.

17. Procédé pour la visualisation d'une image cartographiée selon une des revendications précédentes, **caractérisé en ce que**, si un état de fonctionnement différent annulant l'état de fonctionnement en cours est imposé à l'ordinateur d'exploitation d'écran (BP) à travers une instruction de l'utilisateur, transmise en particulier par l'intermédiaire d'un clavier (T), la préparation et la visualisation de l'information de l'image cartographiée sont commandées en fonction de celui-ci.

18. Procédé pour la visualisation d'une image cartographiée selon la revendication 17, **caractérisé en ce qu'**une image cartographiée d'ensemble et un fragment d'image cartographiée choisi en fonction de la vitesse du véhicule (FV) sont à chaque fois stockés sous forme préparée, et une des deux images cartographiées est visualisée à l'écran (BS) en fonction d'une instruction de l'utilisateur, transmise en particulier par l'intermédiaire du clavier (T).

19. Procédé pour la visualisation d'une image cartographiée selon une des revendications précédentes, **caractérisé en ce que** l'une des informations cartographiques (KI) est constituée par une image aérienne numérisée.

20. Procédé pour la visualisation d'une image cartographiée selon une des revendications précédentes, **caractérisé en ce que** l'une des informations cartographiques (KI) est constituée par une image en 3D mémorisée sous forme numérique, à partir de laquelle, selon la position instantanée du véhicule et en fonction de la déclivité du terrain figurant sur celle-ci et/ou de déclivités mesurées au niveau du véhicule, une conversion en une image de terrain proche de la réalité, conforme à la vision du conducteur ou à un emplacement quelconque prédéfini, est effectuée et visualisée.

21. Procédé pour la visualisation d'une image cartographiée selon une des revendications précédentes, **caractérisé en ce que** chaque image cartographiée ou image de terrain est transmise à une autre station (SZ, SM, SA) par l'ordinateur d'exploitation d'écran (BP).
